Europäisches Patentamt

European Patent Office

Office européen des brevets

(19)

(11) **EP 1 713 001 A1**

(12) **EUROPEAN PATENT APPLICATION**
published in accordance with Art. 158(3) EPC

(43) Date of publication:
18.10.2006 Bulletin 2006/42

(21) Application number: 05703734.3

(22) Date of filing: 17.01.2005

(51) Int Cl.:
*G06F 12/14* (2006.01)   *G06F 15/00* (2006.01)
*G11B 20/10* (2006.01)   *H04L 9/32* (2006.01)

(86) International application number:
**PCT/JP2005/000497**

(87) International publication number:
**WO 2005/076142 (18.08.2005 Gazette 2005/33)**

(84) Designated Contracting States:
**DE FR GB**

(30) Priority: 04.02.2004 JP 2004027940

(71) Applicant: SONY CORPORATION
Tokyo 141-0001 (JP)

(72) Inventor: ASANO, Tomoyuki,
c/o Sony Corporation
Shinagawa-ku, Tokyo 1410001 (JP)

(74) Representative: Nicholls, Michael John
J.A. KEMP & CO.
14, South Square
Gray's Inn
London WC1R 5JJ (GB)

(54) **SERVICE PROVIDING SERVER, INFORMATION PROCESSOR, DATA PROCESSING METHOD, AND COMMUTER PROGRAM**

(57)    An apparatus and a method are provided, which enable a service corresponding to content stored in an information recording medium to be provided only to a device having a valid information recording medium. In a configuration in which content is provided as stored in an information recording medium, and service providing processing is performed from a networked service providing server, the service providing server verifies an information recording medium ID transmitted thereto from a user device, and judges whether or not a service is providable on the basis of service providing situation data for each of the information recording medium IDs, to provide the service. The service is provided only in a case where an information processing apparatus having transmitted a service request is one having read a valid information recording medium ID and the providing of the service is permitted on the basis of the service providing situation data.

FIG. 17

EP 1 713 001 A1

**Description**

[Technical Field]

The present invention relates to a service providing server, an information processing apparatus, a data processing method, and a computer program. More particularly, the present invention is directed to a service providing server, an information processing apparatus, a data processing method, and a computer program, all implementing provision of content-related services to a user device which executes processing of playing back an information recording medium, such as a disc in which content is stored.

[Background Art]

Various kinds of software data (hereinafter referred to as content) such as audio data including music, image data including movies, game programs and various application programs, are provided to a user as stored on an information recording medium including, e.g., a DVD (Digital Versatile Disc), an MD (Mini Disc), a CD (Compact Disc), or a high-density recordable disc using blue laser (Blu-ray Disc). The user can play back content for use in a user device including a PC (Personal Computer), a disc player, i.e., in a playback apparatus.

Furthermore, in recent years, a service providing configuration has been in use, in which various services related to content stored in an information recording medium such as a disc are provided from a server networked with user devices.

For example, when content stored in the disc is a movie in a foreign language, various content-related services including subtitles or dubbing data for its audio, or a disc purchasing discount ticket for a sequel of the content, are provided to the user devices such as PCs from the server connected via a network.

How services are provided from the server can take various forms. Some services may have no restricted access, whereas some other services may be under a certain condition that e.g., they can be provided up to once for each disc which has service-related content recorded thereon.

The rights of distribution or the like of content stored in a disc, that is, various content such as music data and image data, are generally held by their creators or their distributors. Consequently, at the time of the distribution of such content, a configuration for setting a certain restricted access is generally adopted, i.e., only authorized users are permitted to use the content for preventing unauthorized use.

Therefore, also the services provided in association with content, a system is desired to be established, in which provision of a service is permitted on condition that a certain right of use has been validated, i.e., processing of validating that a user is a purchaser of an authentic disc has been performed.

[Disclosure of the Invention]

[Problems to be Solved by the Invention]

The present invention has been made in view of the above-mentioned problem, and an object thereof is to provide a service providing server, an information processing apparatus, a data processing method, and a computer program, all enabling unauthorized use of services to be excluded by validating a right to use a service, in a configuration in which content is provided as stored on various information recording media including DVDs, CDs, blue laser recording media, and further a networked service providing server performs service providing processing.

[Means for Solving the Problems]

A first aspect of the present invention is:

a service providing server for executing service providing processing according to a service providing request from an information processing apparatus, characterized by having:

a data reception section for receiving a service request accompanied by an information recording medium ID and a service ID, from the information processing apparatus;
a storage section storing service providing situation data for each of the information recording medium IDs as service management data for each of title-unique values corresponding to titles of content stored on information recording media; and
a data processing section for executing processing of verifying the information recording medium ID received via the data reception section, acquiring a title-unique value on the basis of the information recording medium ID on condition that the information recording medium ID has been validated, acquiring service providing situation data corresponding to the title-unique value from the storage section to judge whether or not a service specified by the information recording medium ID and the service ID is providable, and executing the service providing processing on condition that the service is judged to be providable.

Furthermore, in an embodiment of the service providing server of the present invention, the data processing section is characterized by being configured to execute the processing of verifying the information recording medium ID as processing of verifying signature data contained in the information recording medium ID, and execute the processing of acquiring, from the storage section, the service providing situation data corresponding to the title-unique value, according to the title-unique value contained in the information recording medium ID, or the title-unique value calculated by executing a calculation based on data contained in the information recording medium ID.

Furthermore, in an embodiment of the service providing server of the present invention, the service providing server is characterized by having the storage section storing a revocation list being a list of unauthorized information recording medium IDs, and the processing of verifying the information recording medium ID in the data processing section is characterized by being executed as processing of comparing the information recording medium ID received from the information processing apparatus with the IDs recorded in the revocation list.

Furthermore, in an embodiment of the service providing server of the present invention, the information recording medium ID is characterized by being configured to include a title-unique value corresponding to a title of content stored in an information recording medium, and signature data generated on the basis of a secret key of a management apparatus and differing for each of the information recording media, and the data processing section is characterized by being configured to execute the processing of verifying the information recording medium ID as processing of generating a message to which a public key of the management apparatus is applied, for comparison with the signature data contained in the information recording medium ID, and also execute the processing of acquiring the service providing situation data corresponding to the title-unique value contained in the information recording medium ID, from the storage section.

Furthermore, in an embodiment of the service providing server of the present invention, the information recording medium ID is characterized by being configured to include a prime $p(w)$ set in response to a number W of pieces of information recording media manufactured, and data $IDKey(w)$ calculated by a calculation based on the prime $p(w)$ and the title-unique value, and the data processing section is characterized by being configured to execute processing of judging whether or not data contained in the information recording medium ID is the prime, as the ID verifying processing, and also calculate the title-unique value from the data $IDKey(w)$ contained in the information recording medium ID, and acquiring the service providing situation data corresponding to the title-unique value calculated, from the storage section.

Furthermore, a second aspect of the present invention is:

an information processing apparatus for executing a service providing request to a service providing server, characterized by having:

a recording medium interface for executing processing of accessing an information recording medium; and a data processing section for executing processing of verifying an information recording medium ID read from the information recording medium via the recording medium interface, and executing processing of transmitting the information recording medium ID to the service providing server on condition that the information recording medium ID has been validated.

Furthermore, in an embodiment of the information processing apparatus of the present invention, the data processing section is characterized by being configured to execute the processing of verifying the information recording medium ID as processing of verifying signature data contained in the information recording medium ID.

Furthermore, in an embodiment of the information processing apparatus of the present invention, the processing of verifying the information recording medium ID in the data processing section is characterized by being configured as processing of acquiring a revocation list being a list of unauthorized information recording medium IDs from a storage section or the information recording medium, and comparing the information recording medium ID received from the information processing apparatus with the IDs recorded in the revocation list acquired.

In an embodiment of the information processing apparatus of the present invention, the information recording medium ID is characterized by being configured to include a title-unique value corresponding to a title of content stored on the information recording medium, and signature data generated on the basis of a secret key of a management apparatus and differing for each of the information recording media; and the data processing section is characterized by being configured to execute the processing of verifying the information recording medium ID as processing of generating a message to which a public key of the management apparatus is applied, for comparison with the signature data contained in the information recording medium ID.

Furthermore, in an embodiment of the information processing apparatus of the present invention, the information recording medium ID is characterized by being configured to include a prime p(w) set in response to each of a number W of information recording media manufactured, and data IDKey(w) calculated by a calculation based on the prime p(w) and a title-unique value, and the data processing section is configured to execute processing of judging whether or not data contained in the information recording medium ID is the prime, as the ID verifying processing.

Furthermore, a third aspect of the present invention is:

a data processing method for executing service providing processing according to a service providing request from an information processing apparatus, characterized by having:

a data reception step of receiving a service request accompanied by an information recording medium ID and a service ID, from the information processing apparatus; and

a data processing step of executing processing of verifying the information recording medium ID received, acquiring a title-unique value on the basis of the information recording medium ID on condition that the information recording medium ID has been validated, acquiring service providing situation data corresponding to the title-unique value acquired, from a storage section storing service providing situation data for each of the information recording medium IDs as service management data for each of title-unique values corresponding to titles of content stored on information recording media, judging whether or not a service specified by the information recording medium ID and the service ID is providable, and executing the service providing processing on condition that the service is judged to be providable.

Furthermore, in an embodiment of the data processing method of the present invention, the data processing step is characterized by including a step of executing the processing of verifying the information recording medium ID as processing of verifying signature data contained in the information recording medium ID, and executing processing of acquiring, from the storage section, the service providing situation data corresponding to the title-unique value, according to the title-unique value contained in the information recording medium ID, or the title-unique value calculated by executing a calculation based on data contained in the information recording medium ID.

Furthermore, in an embodiment of the data processing method of the present invention, the processing of verifying the information recording medium ID in the data processing step is characterized by including a step of executing it as processing of comparing the information recording medium ID received from the information processing apparatus with IDs recorded in a revocation list being a list of unauthorized information recording medium IDs.

Furthermore, in an embodiment of the data processing method of the present invention, the information recording medium ID is characterized by being configured to include a title-unique value corresponding to a title of content stored on the information recording medium, and signature data generated on the basis of a secret key of a management apparatus and differing for each of the information recording media, and the data processing step is characterized by including a step of executing the processing of verifying the information recording medium ID as processing of generating a message to which a public key of the management apparatus is applied, for comparison with the signature data contained in the information recording medium ID, and also executing the processing of acquiring the service providing situation data corresponding to the title-unique value contained in the information recording medium ID, from the storage section.

Furthermore, in an embodiment of the data processing method of the present invention, the information recording medium ID is characterized by including a prime p(w) set in response to each of a number W of information recording media manufactured, and data IDKey(w) calculated by a calculation based on the prime p(w) and the title-unique value, and the data processing step is characterized by including a step of executing processing of judging whether or not data contained in the information recording medium ID is the prime as the ID verifying processing, and also calculating the title-unique value from the data IDKey(w) contained in the information recording medium ID, and acquiring the service providing situation data corresponding to the title-unique value calculated, from the storage section.

A fourth aspect of the present invention is

a data processing method for executing a service providing request to a service providing server, characterized by having:

a recording medium accessing step of executing processing of accessing an information recording medium via a recording medium interface; and

a data processing step of executing processing of verifying an information recording medium ID read from the information recording medium via the recording medium interface, and executing processing of transmitting the information recording medium ID to the service providing server on condition that the information recording medium ID has been validated.

Furthermore, in an embodiment of the data processing method of the present invention, the data processing step is characterized by executing the processing of verifying the information recording medium ID as processing of verifying signature data contained in the information recording medium ID.

Furthermore, in an embodiment of the data processing method of the present invention, the processing of verifying the information recording medium ID in the data processing step is characterized by including a step of acquiring a revocation list being a list of unauthorized information recording medium IDs from a storage section or the information recording medium, and comparing the information recording medium ID received from the information processing apparatus with the IDs recorded in the revocation list acquired.

Furthermore, in an embodiment of the data processing method of the present invention, the information recording medium ID is characterized by including a title-unique value corresponding to a title of content stored on the information recording medium, and signature data generated on the basis of a secret key of a management apparatus and differing for each of the information recording media, and the data processing step is characterized by including a step of executing the processing of verifying the information recording medium ID as processing of generating a message to which a public key of the management apparatus is applied, for comparison with the signature data contained in the information recording medium ID.

Furthermore, in an embodiment of the data processing method of the present invention, the information recording medium ID is characterized by including a prime $p(w)$ set in response to each of a number W of information recording media manufactured, and data $IDKey(w)$ calculated by a calculation based on the prime $p(w)$ and a title-unique value, and the data processing step is characterized by including a step of executing processing of judging whether or not data contained in the information recording medium ID is the prime as the ID verifying processing.

A fifth aspect of the present invention is:

a computer program for executing processing according to a service providing request from an information processing apparatus, characterized by having:

a data reception step of receiving a service request accompanied by an information recording medium ID and a service ID, from the information processing apparatus; and
a data processing step of executing processing of verifying the information recording medium ID received, acquiring a title-unique value on the basis of the information recording medium ID on condition that the information recording medium ID has been validated, acquiring service providing situation data corresponding to the title-unique value from a storage section storing service providing situation data for each of the information recording medium IDs as service management data for each of title-unique values corresponding to titles of content stored on information recording media, judging whether or not a service specified by the information recording medium ID and the service ID is providable, and executing the service providing processing on condition that the service is judged to be providable.

A sixth aspect of the present invention is
a computer program for executing a service providing request to a service providing server, characterized by having:

a recording medium accessing step of executing processing of accessing an information recording medium via a recording medium interface; and
a data processing step of executing processing of verifying an information recording medium ID read from the information recording medium via the recording medium interface, and executing processing of transmitting the information recording medium ID to the service providing server on condition that the information recording medium ID has been validated.

Note that the computer program of the present invention is a computer program that can be provided by a storage medium, a communication medium, e.g., a storage medium such as a CD or an FD, an MO, or a communication medium such as a network, provided in a computer-readable form to, e.g., a general-purpose computer system that can execute various program codes. By providing such a program in a computer-readable form, processing according to the program is realized on the computer system.

Further objects, features and advantages of the present invention will become apparent from a more detailed description that is based on a later-described embodiment of the present invention and accompanying drawings. Note that the system used in the present specification means a logical set configuration of a plurality of apparatus, and is not limited to one wherein apparatus each having its own configuration are grouped within the same enclosure.

[Effects of the Invention]

According to the configuration of the present invention, in a configuration in which content is provided as stored in various information recording media including a DVD, a CD, a blue laser recording medium, and in which service providing processing is performed from a networked service providing server, the service providing server verifies an information recording medium ID transmitted thereto from an information processing apparatus (user device), and provides a service based on service providing situation data for each of the information recording medium IDs. Therefore, only if the information processing apparatus having transmitted a service request is one having read a valid information recording medium ID from an information recording medium, and only if it has been validated that the service is providable on the basis of the service providing situation data, the providing of the service is executed.

Furthermore, according to the configuration of the present invention, the information recording medium ID stored on the information recording medium includes data whose validity can be checked, such as signature data of a management apparatus, and also either has a title-unique value or includes data from which the title-unique value is calculable. Therefore, the service providing server can check the validity based on the data included in the information recording medium ID, and additionally can acquire the title-unique value, whereby the server can specify service providing situation data set so as to correspond to the title-unique value.

[Fig. 1] It is a diagram for explaining data stored in an information recording medium.
[Fig. 2] It is a diagram for explaining a configuration of a revocation list.
[Fig. 3] It is a diagram for explaining MAC (Message Authentication Code) generating/verifying processing when a MAC is used.
[Fig. 4] It is a diagram for explaining a hierarchical tree structure applied to processing of encrypting and distributing various keys and data.
[Fig. 5] It is a diagram showing an example in which a content key is distributed and decrypted using an EKB (Enabling Key Block).
[Fig. 6] It is a diagram for explaining a configuration for manufacturing, managing an information recording medium.
[Fig. 7] It is a diagram for explaining a configuration example of a service providing server.
[Fig. 8] It is a diagram for explaining service providing situation data which the service providing server holds.
[Fig. 9] It is a diagram for explaining a configuration example of an information processing apparatus (user device).
[Fig. 10] It is a diagram for explaining disc ID setting examples.
[Fig. 11] It is a flowchart for explaining processing which the information processing apparatus (user device) executes.
[Fig. 12] It is a flowchart for explaining a disc ID verifying sequence which the information processing apparatus (user device) executes.
[Fig. 13] It is a flowchart for explaining a disc ID verifying sequence which the information processing apparatus (user device) executes.
[Fig. 14] It is a flowchart for explaining a disc ID verifying sequence which the information processing apparatus (user device) executes.
[Fig. 15] It is a flowchart for explaining a disc ID verifying sequence which the information processing apparatus (user device) executes.
[Fig. 16] It is a diagram for explaining processing by which the information processing apparatus receives a service from the service providing server.
[Fig. 17] It is a flowchart for explaining processing which the service providing server executes.

[Best Modes for Carrying out the Invention]

Below, details of a service providing server, an information processing apparatus, a data processing method, and a computer program according to the present invention are described with reference to the drawings. Note that the description is given according to the following items:

1. Data stored in information recording medium
2. Configuration for providing and using/managing content-stored information recording medium
3. Configuration of information processing apparatus constituting service providing server and user device
4. Details of processing in user device
5. Details of processing in service providing server

[1. Data stored in information recording medium]

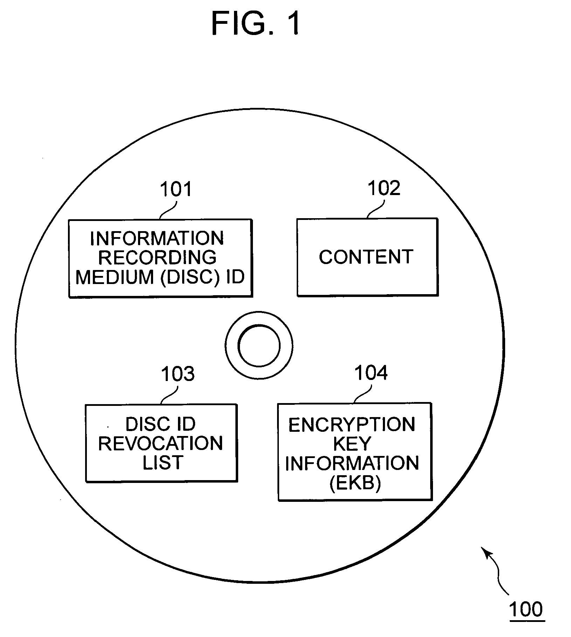

A configuration example of data recorded on an information recording medium is shown in Fig. 1. Fig. 1 is a diagram for explaining data stored on various information recording medium 100 including a CD (Compact Disc), a DVD (Digital Versatile Disc), an MD (Mini Disc), a Blue laser optical disc (Blu-ray Disc), a flash memory. While a disc-shaped medium is shown as an example in Fig. 1, the present invention is applicable not only to such disc-shaped media, but also to various information recording media including a flash memory.

On the information recording medium 100, there is stored information shown in Fig. 1, i.e., a disc ID 101, content 102, a Disc ID Revocation List (DIRL) 103, an encryption key information (EKB: Enabling Key Block) 104.

The disc ID 101 is, e.g., an identifier unique to the disc, and is stored such that it is hard to erase or rewrite. Note that the disc ID 101 includes a unique value (title-unique value) for each title corresponding to the content 102 stored on the information recording medium 100, a unique value (disc-unique value) for each information recording medium 100, and information indicative of its validity, e.g., information (validity verification value), such as a signature. Details of the disc ID are described later.

Note that since a disc-shaped medium is shown as an example of a content-stored information recording medium in a below-described embodiment, its identifier is described as the disc ID. If any other information recording medium such as a flash memory is used as the content-stored information recording medium, an information recording medium ID corresponding to the disc ID is set.

The content 102 is also stored on the information recording medium 100. The content is stored as, e.g., encrypted content. In a case of the encrypted content, key information for decrypting the content is either stored on the information recording medium 100 or provided via a network.

The Disc ID Revocation List (DIRL) 103 is also stored on the information recording medium 100. The Disc ID Revocation List (DIRL) 103 is data in which, when any disc recognized as having been copied without authorization or the like, e.g., a CD-R storing unauthorized copied content is found in the market, a disc ID copied on the unauthorized CD-R together with the content is extracted and listed. The generation and management of the Disc ID Revocation List (DIRL) 103, the providing of the list information to disc manufacturers, and the like are executed by a Central Authority (CA).

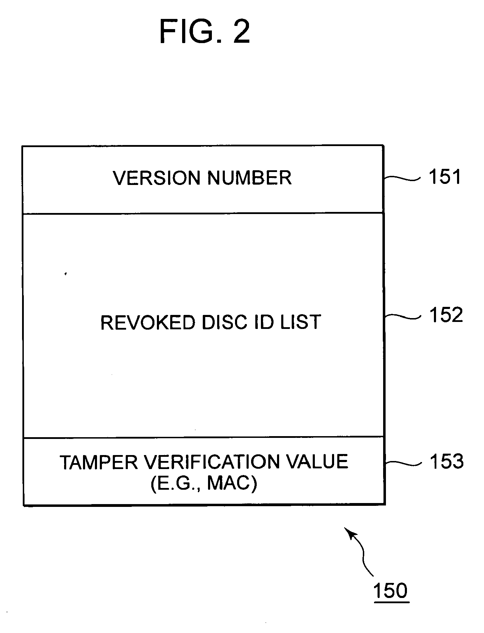

Referring to Fig. 2, a data configuration of the Disc ID Revocation List (DIRL) is described. A Disc ID Revocation List (DIRL) 150 includes, as shown in Fig. 2, a version number 151 monotonously increased according to a time on which the list has been created, a revoked disc ID list 152 enumerating disc IDs of discs for exclusion, and an authenticator as a tampering verification value 153 for the version number 151 and the revoked disc ID list 152. The tampering verification value 153 is data applied to determine whether or not the data for verification, i.e., the version number 151 and the revoked disc ID list 152 in this case has been tampered. A digital signature using a public-key encryption technique, and a Message Authentication Code (MAC) using a symmetric-key encryption technique are applied thereto.

If a digital signature using a public-key encryption technique is used as the tampering verification value 153, playback apparatuses acquire a signature verification key (public key) of a reliable entity, e.g., the above-mentioned Central Authority (CA), and verify the signature created with a signature generation key (secret key) of the Central Authority (CA), using the signature verification key (public key) which each of the playback machines has acquired, whereby to determine the version number 151 and the revoked disc ID list 152 have been tampered or not.

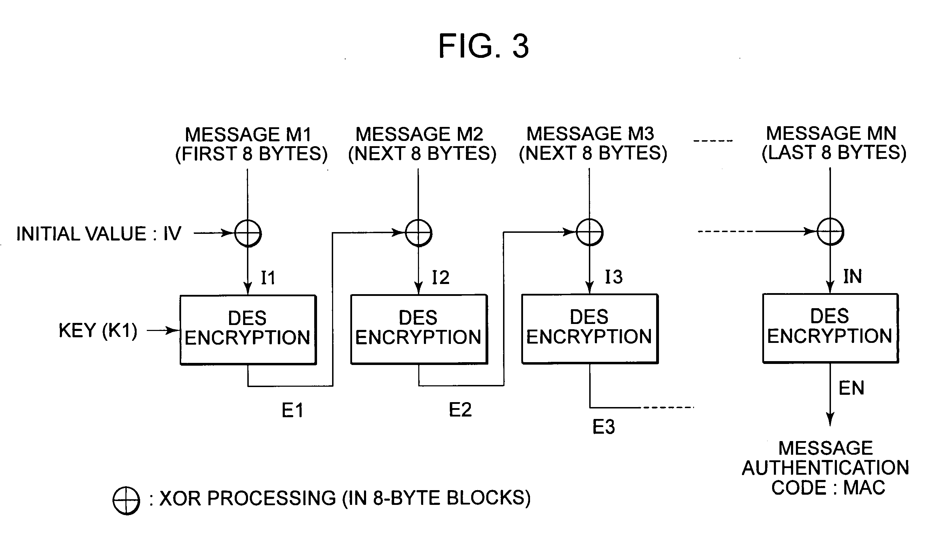

Referring to Fig. 3, Message Authentication Code (MAC) generating/verifying processing using a MAC as the tampering verification value 153 is described. The Message Authentication Code (MAC) is generated as data for tampering verification. While various modes are available for MAC generating/verifying processing, an example of MAC value generation using a DES encryption processing configuration is shown in Fig. 3.

As shown in Fig. 3, a message for processing, i.e., the version number 151 and the revoked disc ID list 152 shown in Fig. 2 in this case, is divided into 8-byte blocks (the divided messages are hereinafter referred to as M1, M2, ..., MN). First, an Initial Value (hereinafter referred to as IV) is XORed with M1 (the result is I1). Next, I1 is inputted to a DES encrypting section using a key (hereinafter referred to as K1) (its output is E1). Successively, E1 is XORed with M2, and its output I2 is inputted to the DES encrypting section using the key K1 (an output E2). Thereafter, this processing is repeated to encrypt all the messages. The last output EN is the Message Authentication Code (MAC).

A MAC value takes a different value once its generator data has been altered. Thus, if a comparison between a MAC generated on the basis of data (message) for verification and a MAC recorded indicates that both coincide, it is proved that the data (message) for verification has not been altered or tampered.

Returning to Fig. 1, the description of the data stored in the information recording medium 100 is continued. The encryption key information (EKB: Enabling Key Block) 104 is also stored on the information recording medium 100.

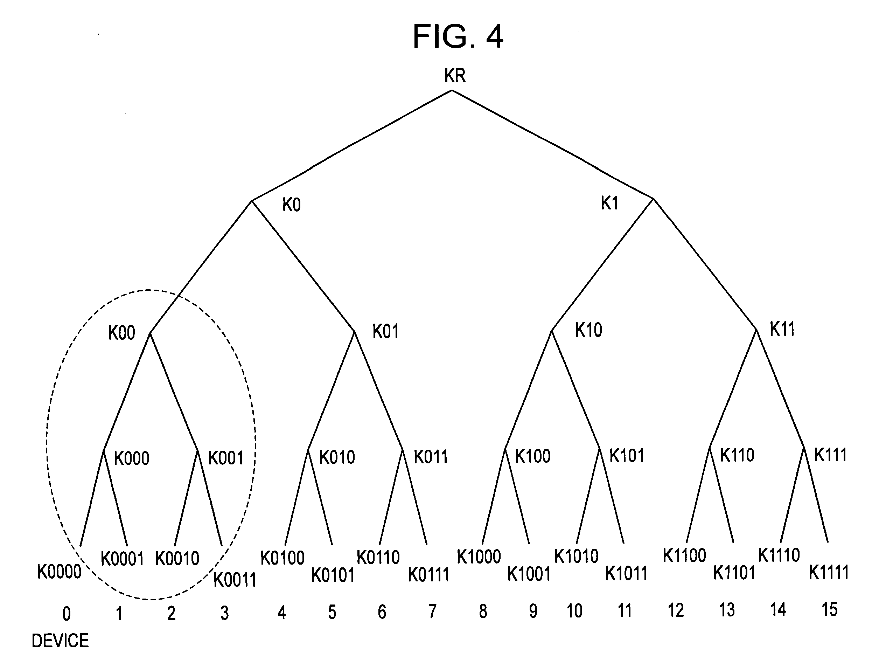

Referring to a drawing, a configuration for providing secret information using the encryption key information (EKB) is described. Numbers 0-15 shown at the lowermost layer of Fig. 4 are user devices as information processing apparatus for, e.g., using content. Namely, leaves in a hierarchical tree structure shown in Fig. 4 correspond to the devices, respectively.

Each of the devices 0-15 stores a key set (device keys (DNKs: Device Node Keys)) in a memory at the time of its manufacture or shipment, or thereafter. The key set (DNKs) includes keys (node keys) assigned to nodes in a path from its own leaf to a root in the hierarchical tree structure, and a leaf key of its own leaf. Symbols K0000-K1111 shown in the lowermost layer in Fig. 4 are the leaf keys assigned to the devices 0-15, respectively, and keys KR-K111 indicated from a KR (root key) at the uppermost layer to nodes at the second layer from the lowermost layer are the node keys.

In the tree structure shown in Fig. 4, e.g., the device 0 owns the leaf key K0000, and the node keys K000, K00, K0, KR, as device keys. The device 5 owns K0101, K010, K01, K0, KR. The device 15 owns K1111, K111, K11, K1, KR. Note that only sixteen devices 0-15 are shown in the tree of Fig. 4, and the tree structure is symmetrical having four layers. However, other configurations including more devices within the tree, and also different layers in parts of the tree may be applicable.

Moreover, the devices in the tree structure of Fig. 4 include various recording media, such as, e.g., a DVD, a CD, an MD, a flash memory embedded in the device or releasable from the device. Furthermore, various application services can coexist. It is over such a configuration in which different devices and different applications coexist to which the hierarchical tree structure shown in Fig. 4 being content or key distribution configuration is applied.

In a system in which such various devices and applications coexist, devices in a part enclosed by a broken line in Fig. 4, i.e., the devices 0, 1, 2, 3 are set as a group. For example, only these devices enclosed by the broken line and included in the group hold authorized rights, i.e., licenses to use encrypted content stored on information recording media. In this case, an EKB is set such that only the devices 0, 1, 2, 3 can acquire a key applied to decrypting the content, and the set EKB is stored on the information recording media each storing the encrypted content.

As is apparent from Fig. 4, the three devices 0, 1, 2, 3 included in one group hold shared keys K00, K0, KR as the device keys (DNKs: Device Node Keys) stored on their devices.

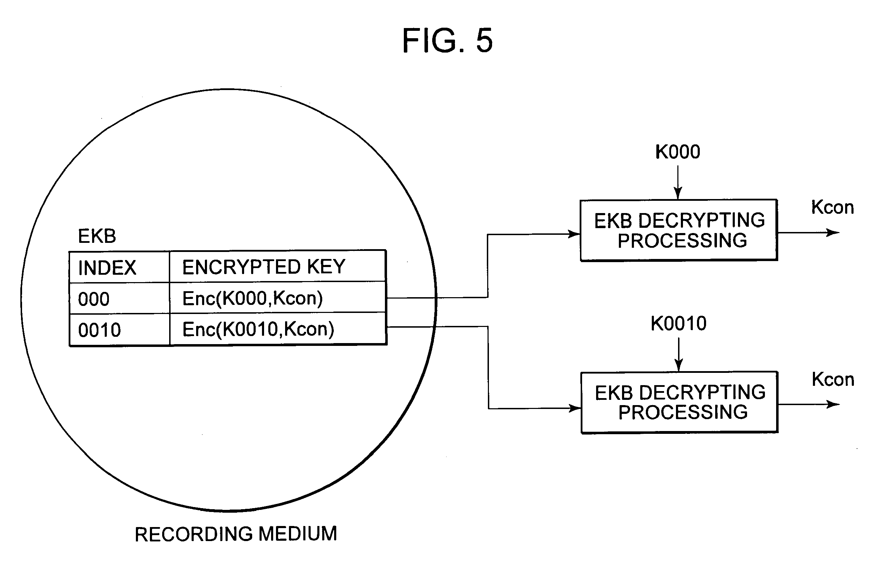

At this point, an EKB configuration for enabling only the devices 0, 1, 2 to acquire a content key Kcon applied to decrypting the content is as shown in, e.g., Fig. 5. Namely, an EKB is set as follows:

Index Encrypted data
000     Enc (K000, Kcon)
0010     Enc (K0010, Kcon)

Note that Enc (Kx, Ky) denotes data Ky encrypted with a key Kx. At this point, the devices 0, 1 can decrypt the encrypted data indexed as [000] using the device key [K000] they hold, and also the device 2 can decrypt the encrypted data indexed as [0010] in the EKB using the device key [K0010] it holds. They can acquire the content key Kcon through their processing of decrypting the respective encrypted data. The other device holds none of the device keys [K000], [K0010], and thus cannot acquire the content key by decryption of the EKB even if having received the EKB so configured as shown in Fig. 5.

In this way, an EKB is set as data having a configuration corresponding to licensed devices, whereby the EKB is configured as a key information block which is processable only by any selected device, and through which secret information such as a content key can be provided to only specific devices. The key information (EKB) issuing center 104 generates an EKB processable only by devices to which it permits use of content, and provides the EKB to the information recording medium manufacturing entity 103. The information recording medium manufacturing entity 103 stores the EKB in an information recording medium 110 together with the encrypted content, and provides the media to the users.

[2. Configuration for providing and using/managing content-stored information recording medium]

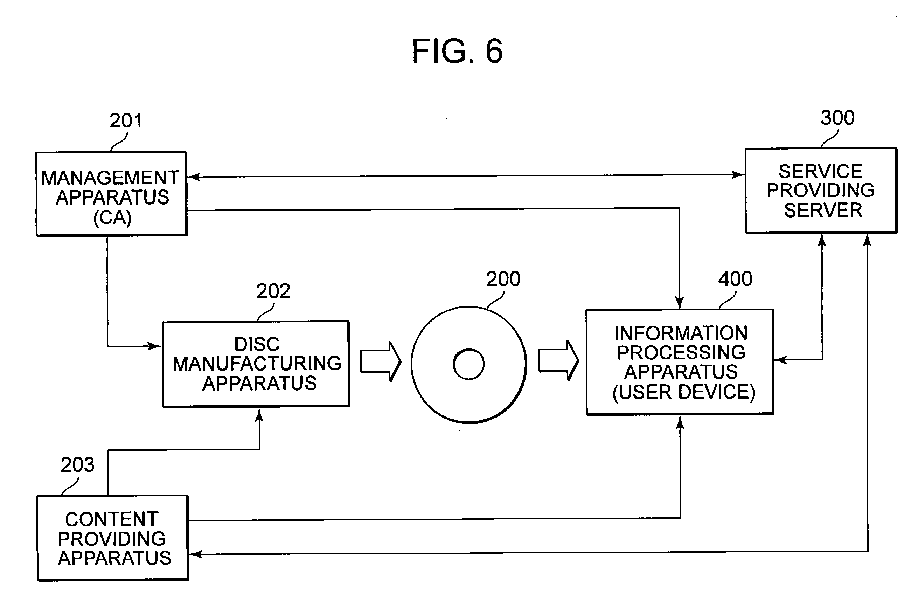

Fig. 6 is a diagram for explaining a configuration for providing and using/managing an information recording medium 200 storing the above-mentioned various data.

As shown in Fig. 6, in a configuration for providing and managing content, there are a management apparatus 201 that the Central Authority (CA) uses, a content providing apparatus 203 that a content provider uses, a disc manufacturing apparatus 202 that a disc manufacturer uses, an information processing apparatus (user device) 400 that a user uses for executing content playback processing, and a service providing server 300 for executing, e.g., processing of providing services, such as, e.g., subtitles, corresponding to content stored on the information recording medium 200, with respect to the information processing apparatus (user device) 400.

The management apparatus 201 generates the aforementioned disc ID and Disc ID Revocation List (DIRL), and provides them to the disc manufacturing apparatus 202. Moreover, the content providing apparatus 203 provides encrypted content and an Enabling Key Block (EKB) to the disc manufacturing apparatus 202.

The disc manufacturing apparatus 202 manufactures the information recording medium 200 in which the disc ID and Disc ID Revocation List (DIRL) received from the management apparatus 201 and the encrypted content data and the Enabling Key Block (EKB) received from the content providing apparatus 203 are recorded.

A user, e.g., purchases the information recording medium 200, and sets it in the information processing apparatus (user device) 400. The information processing apparatus (user device) 400 can verify that the disc ID recorded in the information recording medium 200 is valid, check that the disc ID is not found in the Revocation List DIRL, and acquire appropriate content key data from the Enabling Key Block EKB on the basis of its own device node key data DNK, whereby he/she can decrypt and play back the encrypted content data.

Furthermore, the information processing apparatus (user device) 400 transmits the disc ID recorded on the information recording medium 200 and a service ID as a service identifier, to the service providing server 300. Then, in the service providing server 300, the validity of the disc ID is verified, and further, whether or not the service is providable is determined on the basis of service providing situation data which the service providing server 300 holds. If it is determined that the disc ID is valid and that the service is providable on the basis of the service providing situation data, the server 300 executes its service providing processing for the information processing apparatus (user device) 400.

[3. Configuration of information processing apparatus constituting service providing server and user device]

Next, a configuration of the information processing apparatus as the service providing server and the user device is described.

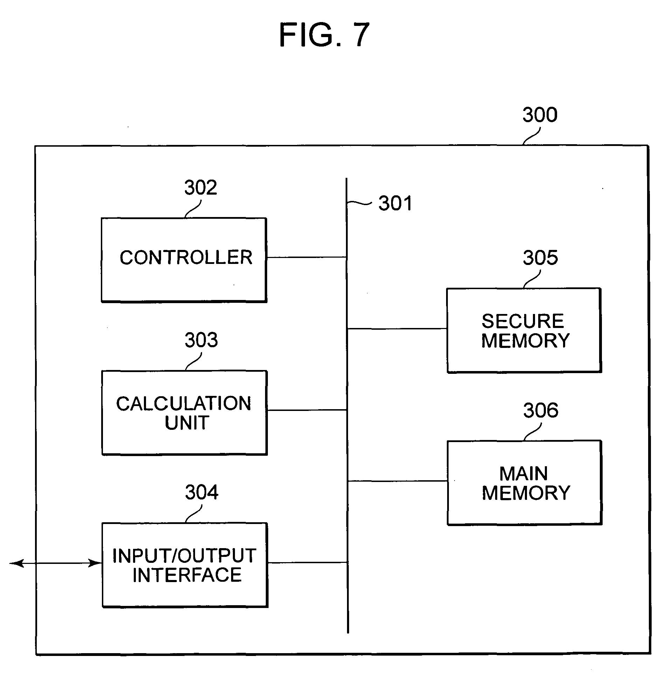

Fig. 7 is a diagram showing a configuration of the service providing server shown in Fig. 6. As shown in Fig. 7, the service providing server 300 has, e.g., a controller 302 including a CPU, a calculation unit 303 for executing various calculating processing, an input/output interface (I/F) 304 as an interface for input/output of data from data input devices and to data output devices, and for input/output of data via a network, a secure memory 305, a main memory 306. These components are interconnected via a bus 301.

The main memory 306 stores data of a low security level, among various data used for processing by the calculation unit 303 and the controller 302. The secure memory 305 stores data of a high security level, among the various data used for processing by the calculation unit 303 and the controller 302. The secure memory 305 stores, e.g., the disc ID and the like received from the management apparatus 201 shown in Fig. 6.

The input/output interface 304 is connected to, e.g., a control means or a network, not shown, and receives various data from the management apparatus 201 and the content providing apparatus 203 shown in Fig. 6. The interface 304 further implements communication with the information processing apparatus (user device) 400, which is to receive a service, so as to provide the service.

The calculation unit 303 executes various calculations including generation of verification data for signature data, on the basis of control from the controller 302. The controller 302 executes various programs, such as, e.g., a checking program as to whether or not a service is providable to a user device, a service providing program.

The service providing server 300 receives the Disc ID Revocation List from the management apparatus 201, the content providing apparatus 203, or other apparatus via the input/output interface (I/F) 304, periodically or for each event, and constantly stores the latest version in the secure memory 305.

Moreover, the server 300 also receives title-based title-unique values and service identification information for identifying services to be provided, from the content providing apparatus 203 or other apparatus, via the input/output interface (I/F) 304, and stores a service providing situation database in which title-based service providing situation information is managed, in the secure memory 305.

"Title" means a title corresponding to content stored on the information recording medium 200 which is attached to the information processing apparatus (user device) 400.

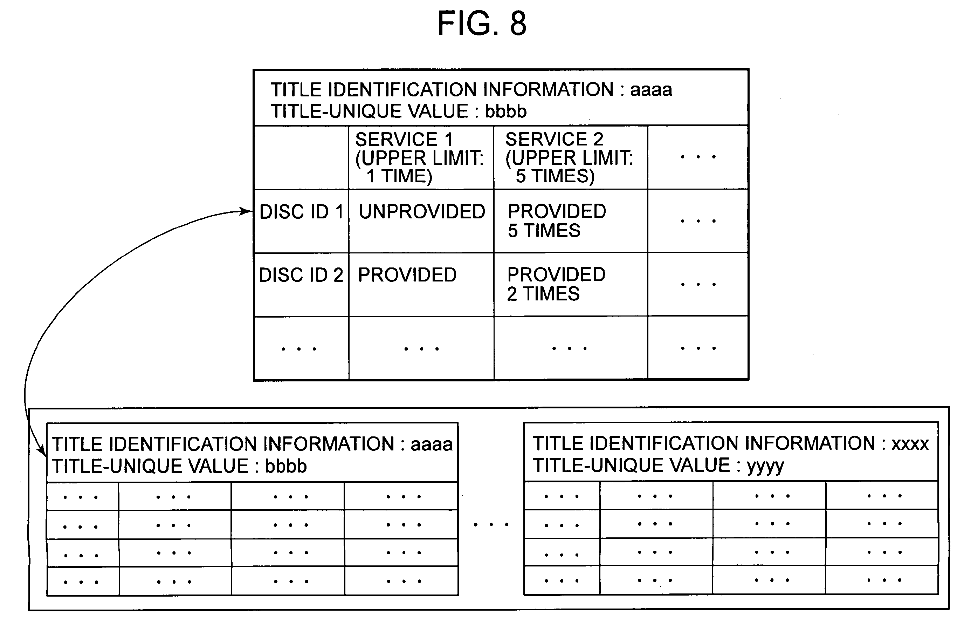

An example of a data configuration of the service providing situation database is shown in Fig. 8. The service providing situation database includes, as shown in Fig. 8, title identification information about content, which corresponds to services that the service providing server 300 provides, and service providing situations as to the services set for each title-unique value and corresponding to the disc IDs of discs storing the content having that title.

For example, service providing situation data shown in Fig. 8 (a) is service providing situation data as to:

title identification information: aaaa; and
title-unique value: bbbb,

and is a recording of how many times a Service 1 and a Service 2 associated with content corresponding to this title have so far been provided in response to service providing requests based on discs having a disc ID 1 and a disc ID 2, respectively.

Note that in the service providing situation data shown in Fig. 8 (a),
the Service 1 is a service specified to be providable only one time to the disc ID 1, and
the Service 2 is a service specified to be providable up to 5 times to the disc ID 1.

The service providing server 300 stores the service providing situation data shown in Fig. 8 in, e.g., the secure memory 305 and holds them therein, and checks, in response to a service providing request accompanied by a disc ID from the information processing apparatus (user device) 400, if the service providing requesting device is making the service providing request based on a valid disc ID, and further, provides the service only if an upper service providable limit is not reached on the basis of the service providing situation data shown in Fig. 8.

When having received the service providing request accompanied by the disc ID from the information processing apparatus (user device) 400, the service providing server 300 validates the disc ID having been transmitted thereto from the information processing apparatus (user device) 400, and also checks that the disc ID having been transmitted thereto from the information processing apparatus (user device) 400 is not revoked in the Revocation List held by the service providing server 300.

Furthermore, the service providing server 300 executes processing, such as checking or extracting the title-unique value based on the validated disc ID, extracting the disc-unique value. Then, the server 300 specifies, on the basis of the acquired title-unique value, service providing situation data as to the corresponding title by referring to the database storing the service providing situation data shown in Fig. 8, and checks if the server 300 can provide the service on the basis of the specified data. Namely, the server 300 provides the service only if the upper service providable limit is not reached on the basis of the service providing situation data shown in Fig. 8.

Note that in the configuration example of the service providing situation data shown in Fig. 8, the service providing situation data is stored for each disc ID. However, an alternative configuration may be adopted, in which the disc-unique value for identifying an individual disc is used, instead of the disc ID.

Note that the service providing server 300 updates the service providing situation data shown in Fig. 8 when having provided the service to the information processing apparatus (user device) 400.

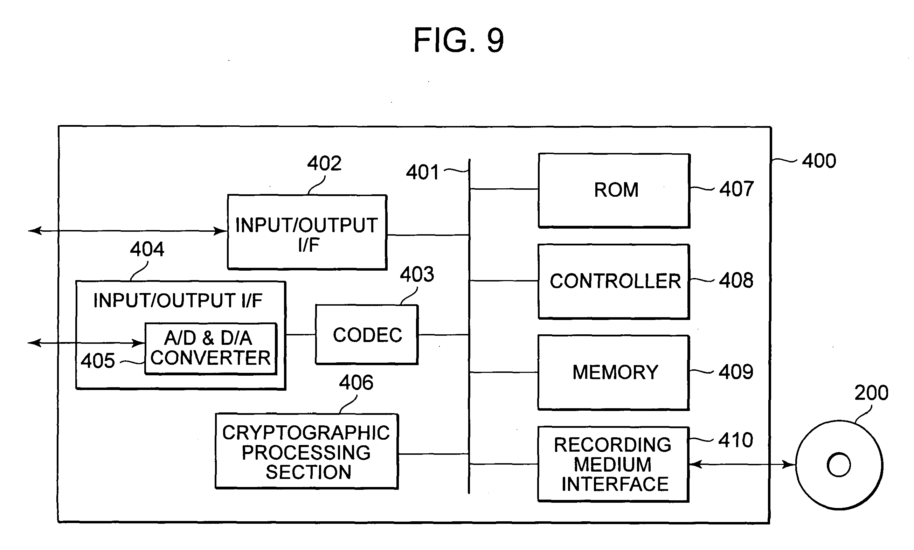

Referring next to Fig. 9, a configuration of the information processing apparatus (user device) 400 is described.

As shown in Fig. 9, the information processing apparatus (user device) 400 has, e.g., an input/output interface 402, a codec 403 for executing generation and decoding of various coded data such as MPEG (Moving Picture Experts Group), an input/output interface 404 provided with an A/D and D/A converter 405, a encryption processing section 406, a ROM (Read Only Memory) 407, a controller 408, a memory 409, and a recording medium interface for accessing the information recording medium 200. These components are interconnected to a bus 401.

The input/output interface 402 receives a digital signal supplied from an external source, such as a network, for output onto the bus 401, and also receives a digital signal on the bus 401 for output to the external source.

The codec 403 decodes, e.g., MPEG-coded data supplied via the bus 401 for output to the input/output interface 404, and also encodes a digital signal supplied from the input/output interface 404 for output onto the bus 401.

The input/output interface 404 incorporates therein the A/D and D/A converter 405. The input/output interface 404 receives an analog signal supplied from an external source, and subjects the signal to analog-to-digital converting processing using the A/D and D/A converter 405, for output to the codec 403 as a digital signal, and also subjects a digital signal from the codec 403 to digital-to-analog converting processing using the A/D and D/A converter 405 for output to the external source as an analog signal.

The encryption processing section 406 is, e.g., formed of a one-chip LSI, and has a configuration for encrypting or decrypting a digital signal such as, e.g., content supplied thereto via the bus 401, for output onto the bus 401. Note that the encryption processing section 406 is not limited to the one-chip LSI, but may alternatively be realized by a configuration in which various software or hardware is combined.

The ROM 407 stores, e.g., leaf key data being a device key either unique to each information processing apparatus as a user device or unique to each group of a plurality of information processing apparatus (user devices), and node key data being device key data shared among a plurality of playback apparatus or a plurality of groups. These are applied to processing of decrypting the aforementioned Enabling Key Block (EKB) as the encryption key information.

The controller 408 includes, e.g., a CPU for executing a program stored in the memory 409. The controller 408 centrally controls processing of the information processing apparatus (user device) 400. Namely, the function (processing) of the information processing apparatus (user device) 400 is regulated by the program executed by the controller 408.

The memory 409 reads the above-mentioned Disc ID Revocation List (DIRL) from the information recording medium 200, for secure storage. For example, it is preferable to keep the data tamper-resistant by, e.g., storing the data in the memory as encrypted on the basis of the ID set to each information processing apparatus (user device) 400. In this way, the Disc ID Revocation List (DIRL) is stored such that it is not readily feasible to externally erase, tamper, or replace with any old version. The recording medium interface 410 is used to access the information recording medium 200.

[4. Details of processing in user device]

Next, details of processing are described, which the information processing apparatus 400 as a user device performs when receiving a service from the service providing server 300.

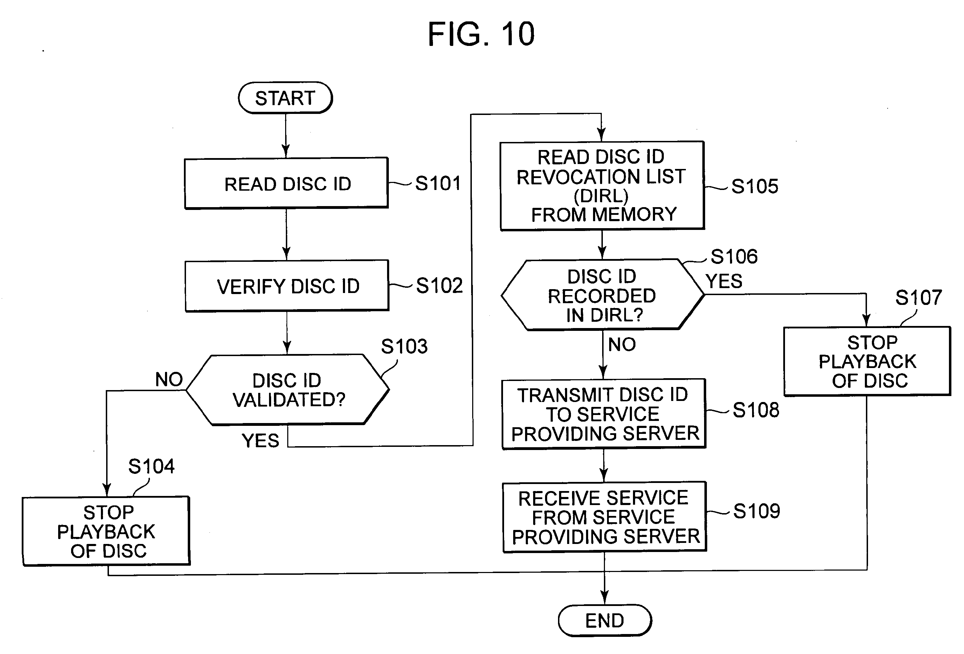

Fig. 10 is a flowchart for explaining a sequence according to which the information processing apparatus (user device) 400 shown in Fig. 9 having the information recording medium attached thereto executes processing when receiving a service from the service providing server.

In step S101, the information processing apparatus (user device) 400, when having the information recording medium 200 set thereto in a predetermined access position, reads the disc ID from the information processing medium 200 via the recording medium interface 410, and stores it in the memory 409.

In step S102, the controller 408 of the information processing apparatus (user device) 400 reads the disc ID stored in the memory 409, to verify whether or not it has been tampered and whether or not it is valid. This verifying processing is described later.

In step S103, the controller 408, having judged in step S102 that the above disc ID is valid, proceeds to step S105; otherwise, the controller 408 proceeds to step S104. In step S104, the controller 408 stops (prohibits) decryption and playback of the encrypted content recorded on the information recording medium 200.

If having judged that the disc ID is valid, the controller 408 reads, in step S105, the Disc ID Revocation List (DIRL) from the information recording medium 200 via the recording medium interface 410. And if a digital signature using a public-key encryption technique is put thereto as the tampering verification value for the Revocation List read, the controller 408 verifies the List DIRL using a signature verification key (public key). If a Message Authentication Code MAC is given as the tampering verification value, the MAC verifying processing described earlier with reference to Fig. 3 is executed.

On condition that the Disc ID Revocation List (DIRL) has been judged to be untampered, the controller 408 makes a comparison between a version of that Disc ID Revocation List (DIRL) and a version of a Disc ID Revocation List (DIRL) already stored in the memory 409.

If the version of the Disc ID Revocation List (DIRL) read is newer than the version of the Disc ID Revocation List (DIRL) already stored in the memory 409, the controller 408 updates the Revocation List DIRL in the memory 409 with the Disc ID Revocation List (DIRL) read.

In step S106, the controller 408 judges whether or not the disc ID read in step S101 is present in the Revocation List DIRL, and proceeds to step S107 when having determined that it is present; otherwise it proceeds to step S108. In step S107, the controller 408 stops (prohibits) decryption and playback of the encrypted content recorded in the information recording medium 200.

If the disc ID is not present in the Revocation List, the controller 408, proceeding to step S108, transmits the disc ID read in step S101 to the service providing server, and further, in step S109, receives the service from the service providing server. Note that the service providing server verifies the disc ID received from the information processing apparatus (user device) 400 in step S108, and executes the service providing processing only if the disc ID has been validated.

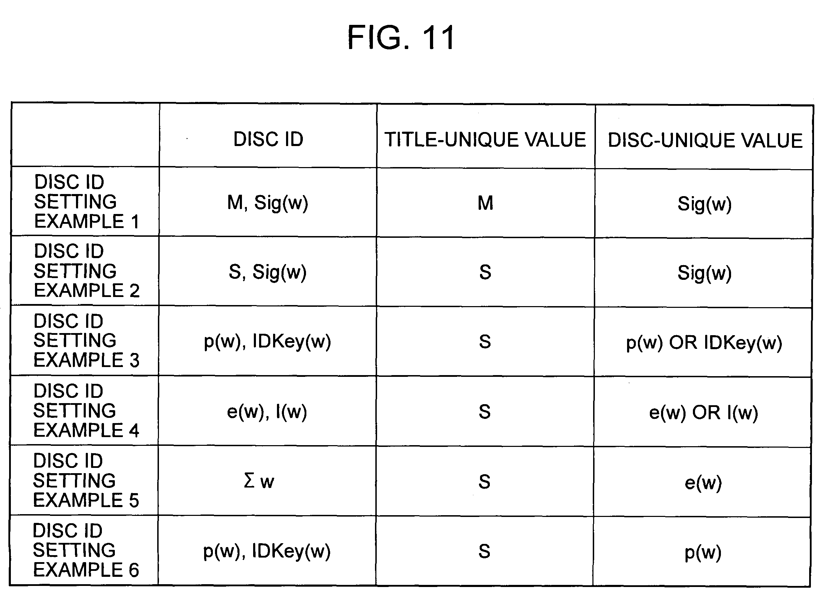

Below, disc ID verifying processing executed in step S102 is described. The disc ID stored on the information recording medium is set as highly counterfeit-resistant identification information. An example of a disc ID format is shown in Fig. 11.

Fig. 11 show six types of disc ID setting example each indicating correspondence between an information recording medium ID (disc ID) as an information recording medium identifier, the title-unique value being a unique value set to the title of content stored on the information recording medium, and the disc-unique value set as a unique value for the information recording medium. Note that both the disc ID and the disc-unique value are generated by the management apparatus 201. A title-unique value M may be a part of information constituting the content stored on the information recording medium, or may be configured to be generated by the management apparatus 201, the content providing apparatus 203. A title-unique value S is generated by the management apparatus 201 on the basis of the title-unique value M.

Symbols shown in Fig. 11 have the following meanings:

M: A unique value corresponding to a title of content stored on an information recording medium;

w: w = 1, 2, ···, W, where W is the number of information recording media to be manufactured;

Sig(w): Signature data based on a secret key (e.g., a secret key set on the basis of a public-key encryption technique) of the management apparatus, which is generated according to the number W of information recording media to be manufactured and is thus different for each of the information recording media. Sig(w) means that signatures of the discs are set as Sig(1), Sig(2), ···, Sig(W);

p(w): Primes set so as to correspond to the number W of information recording media to be manufactured. Different prime data is set for each of the information recording media generated according to the number W of information recording media to be manufactured; and

S: A unique value corresponding to a title of content stored on an information recording medium, and $S = K^T \bmod M$, where T is a value given by the following equation:

[Math 1]

$$T = \prod_{w=1}^{W} p_w$$

$$\text{IDKey(w): IDKey(w)} = K^{T/p(w)} \bmod M$$

where K is a value set to each title, and satisfies $K \in Z^*_M$ (K is a generator of a cyclic group $K \in Z^*_M$. Note that for each $X \in Z^*_M$, there exists an element $X^{-1} \in Z^*_M$ modulo x in integers x being 1 to X-1).

e(w): Different values corresponding to the number W of discs to be manufactured, which satisfy $e(w) \in Z^*_M$, where e(w) and $\lambda(M)$ are disjoint, i.e., the greatest common divisor of e(w) and $\lambda(M)$ is 1. Note that $\lambda(M)$ is the least common multiple of primes (q1 - 1) and (q2 - 1), where q1, q2 are primes large enough to be applied to an RSA encryption.

$$\text{I(w): I(w)} = S^{d(w)} \bmod M$$

where d(w) is the inverse of e(w) modulo $\lambda(M)$.

$\Sigma$w: Data obtained by encrypting a message M(w) being connected data obtained by connecting data S and data e (w), with a secret key of the management apparatus (CA) 201.

Below, disc ID verifying processing sequences in the information processing apparatus (user device) 400, are described, which correspond to the six different disc ID setting examples shown in Fig. 11.

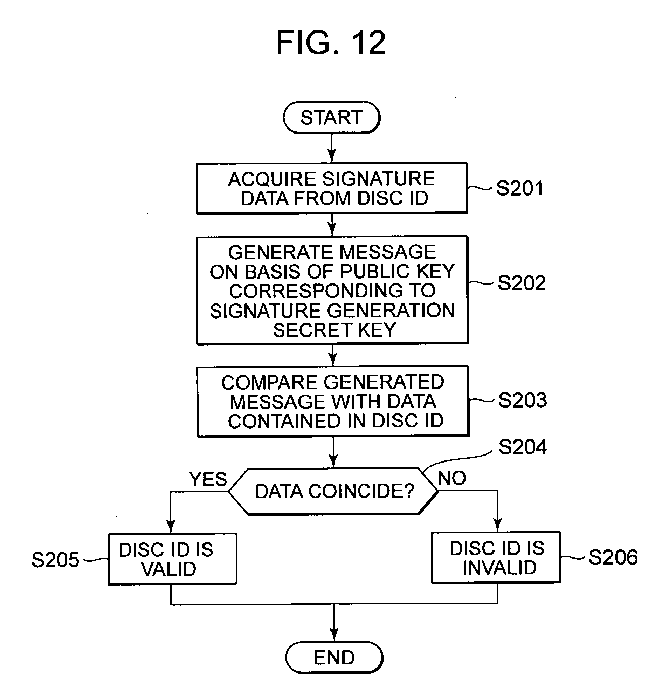

Referring to Fig. 12, a disc ID verifying processing sequence in the information processing apparatus (user device) 400, which corresponds to a Setting Example 1, is described.

In the Setting Example 1,

$$\text{disc ID = M, Sig(w),}$$

title-unique value = M, and
disc-unique value = Sig(w)

are set.

In step S201, the controller 408 of the information recording apparatus (user device) 400 extracts signature data SIG(w) in disc ID (w). Note that the disc ID is denoted a disc ID(w) since it takes a value specific to each of individual discs (w) where w = 1, 2, ... W, given the number of discs to be manufactured being W.

In step S202, the controller 408 generates M(w)' from the signature data SIG(w) read in step S201, on the basis of a public key and published parameters of the management apparatus 12 (Central Authority CA). The message is also denoted similarly to the disc ID(w). A message M(w) indicates that the message is made to correspond to each of the discs.

In step S203, the controller 408 compares a message M(w) contained in the disc ID(w) with the message M(w)' generated in step S202.

In step S204, the controller 408, when having judged that both coincide in the comparing processing in step S203, proceeds to step S205; otherwise, it proceeds to step S206.

In step S205, the controller 408 judges that the disc ID(w) extracted in step S201 is valid. In step S206, the controller 408 judges that the disc ID(w) extracted in step S201 is invalid.

In a Setting Example 2,

$$\text{disc ID = S, Sig(w),}$$

title-unique value = S, and
disc-unique value = Sig(w)

are set.

This Setting Example 2 is different from the Setting Example 1 only in the title-unique value S in place of M. Thus, its disc ID verifying processing sequence in the information processing apparatus (user device) 400 is similar to that in the Setting Example 1, except that data generated from the signature data in step S202 is a message S'(w) and that data for comparison in step S203 is data S(w) contained in the disc ID.

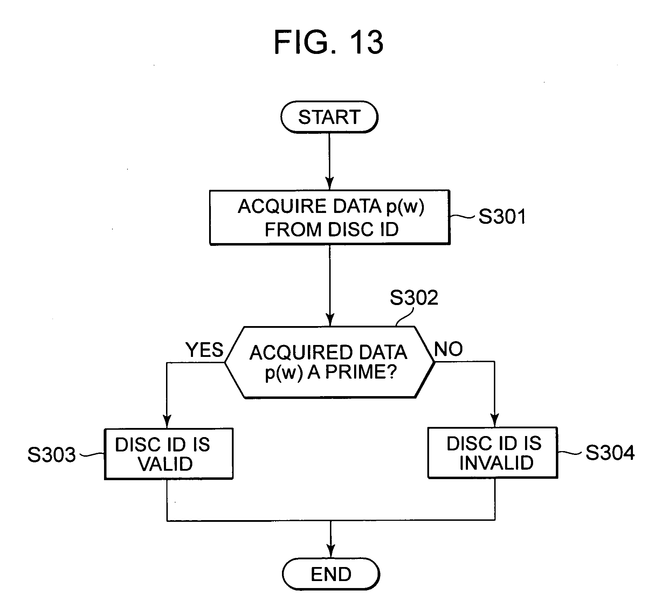

Referring next to Fig. 13, a disc ID verifying processing sequence in the information processing apparatus (user device) 400, which corresponds to a Setting Example 3, is described.
In the Setting Example 3,

$$\text{disc ID} = p(w), \text{IDKey}(w),$$

title-unique value = S, and
disc-unique value = p(w) or IDKey(w)

are set.

In step S301, the controller 408 of the information processing apparatus (user device) 400 extracts data p(w) in the disc ID(w) read from the information recording medium 200.

In step S302, the controller 408 judges whether or not the data p(w) extracted in step S302 is a prime. The controller 408, when having judged that the data p(w) is a prime, proceeds to step S303; otherwise, it proceeds to step S304.

In step S303, the controller 408 judges that the disc ID(w) extracted in step S301 is valid. In step S304, the controller 408 judges that the disc ID(w) extracted in step S301 is invalid.

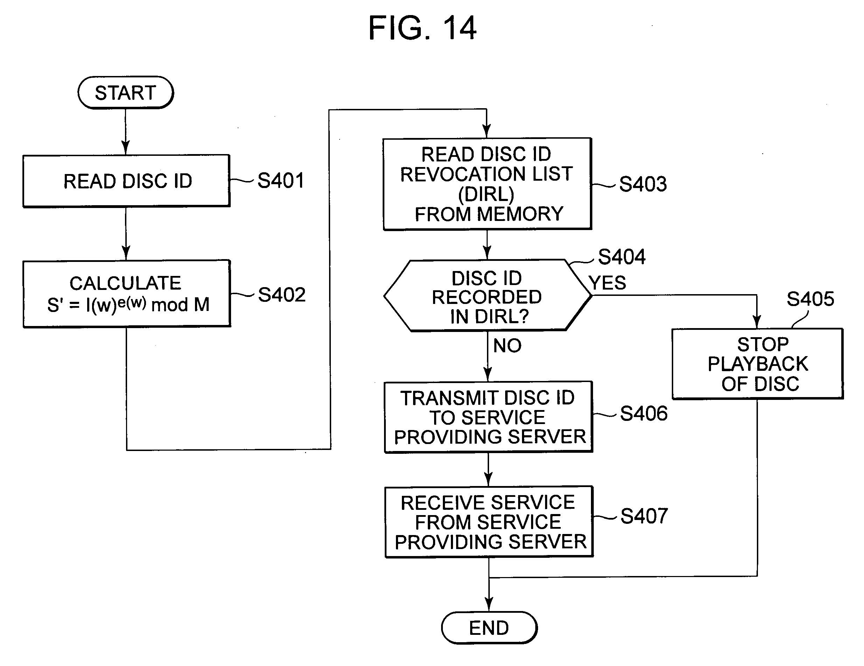

Referring next to Fig. 14, a disc ID verifying processing sequence in the information processing apparatus (user device) 400, which corresponds to a Setting Example 4, is described.
In the Setting Example 4,

$$\text{disc ID} = e(w), I(w),$$

title-unique value = S, and
disc-unique value = e(w) or I(w)

are set.

In step S401, the information processing apparatus (user device) 400, when having the information recording medium 200 set thereto in a predetermined access position, reads a disc ID from the information recording medium 200 via the recording medium interface 410, and stores this in the memory 409.

In step S402, the controller 408 of the information processing apparatus (user device) 400 calculates $I(w)^{e(w)}$ mod M using the data e(w) and I(w) in the disc ID recorded in the memory 409, and the result is set as data S'. Namely,

$$S' = I(w)^{e(w)} \bmod M$$

In step S403, the controller 408 reads a Disc ID Revocation List (DIRL) from the information recording medium 200 via the recording medium interface 410. In a case where a digital signature using a public-key encryption technique is put thereto as the tampering verification value for the Revocation List read, the controller 408 verifies the List DIRL using a signature verification key (public key). In a case where a Message Authentication Code MAC is given as the tampering verification value, the MAC verifying processing described earlier with reference to Fig. 3 is executed.

On condition that the Disc ID Revocation List (DIRL) has been judged to be untampered, the controller 408 makes a comparison between a version of that Disc ID Revocation List (DIRL) and a version of a Disc ID Revocation List (DIRL) already stored in the memory 409. In a case where the version of the Disc ID Revocation List (DIRL) read is newer than the version of the Disc ID Revocation List (DIRL) already stored in the memory 409, the controller 408 updates the Revocation List DIRL in the memory 409 with the Disc ID Revocation List (DIRL) read.

In step S404, the controller 408 judges whether or not the disc ID read in step S401 is present in the Revocation List, and proceeds to step S405 when having determined that it is present; otherwise it proceeds to step S406.

In step S405, the controller 408 stops (prohibits) decryption and playback of the encrypted content recorded in the information recording medium 200c. In step S406, the controller 408 transmits the disc ID read in step S401 to the service providing server, and further, in step S407, receives a service from the service providing server. Note that the service providing server verifies the disc ID received from the information processing apparatus (user device) 400 in step S406, and then executes the service providing processing only in a case where the disk ID has been validated.

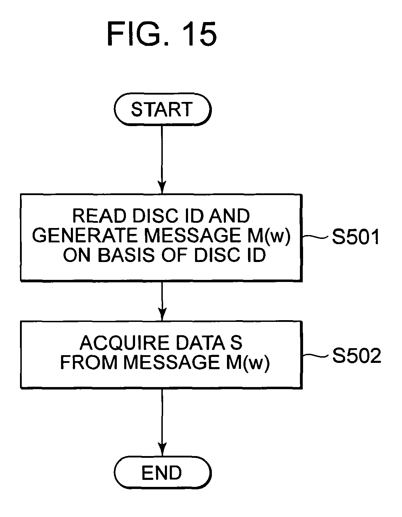

Referring next to Fig. 15, a disc ID verifying processing sequence in the information processing apparatus (user device) 400, which corresponds to a Setting Example 5, is described.

In the Setting Example 5,

$$disc\ ID = \Sigma w,$$

title-unique value = S, and
disc-unique value = e(w)

are set.

In step S501, the controller 408 of the information processing apparatus (user device) 400 decrypts a disc ID (w) read from the information recording medium 200 on the basis of public key data of the management apparatus 201 (Central Authority CA), to generate a message M(w). The message M(w) is, as aforementioned, is data in which the data S and the data e(w) are connected.

In step S502, the information processing apparatus (user device) 400 extracts the data S from the message M(w) decrypted in step S501, on the basis of a size |S|, a size |e(w)|, and a combination pattern of the data S and the data e(w), which are published by the management apparatus 201.

The information processing apparatus (user device) 400, subsequent to the above-mentioned processing shown in Fig. 15, performs steps S105-S109 shown in Fig. 10. In this case, the information processing apparatus (user device) 400 uses the disc ID(w) read from the information recording medium 200 in step S501 as a disc ID, in the disc ID comparing processing with the Revocation List in steps S105, S106 shown in Fig. 10.

The information processing apparatus (user device) 400 decrypts content data, using the data S extracted in step S502 as content key data. Therefore, the content data cannot be decrypted properly in a case where the proper data S cannot be acquired via the above processing of steps S501, S502.

In a Setting Example 6,

$$disc\ ID = p(w),\ IDKey(w),$$

title-unique value = S, and
disc-unique value = p(w)

are set. This has a disc ID configuration similar to that in the Setting Example 3, and thus disc ID verifying processing similar to the processing described earlier with reference to Fig. 13 is executed.

[5. Details of processing in service providing server]

Next,, processing is described, which the service providing server 300 performs when having received a service providing request from the information processing apparatus (user device) 400.

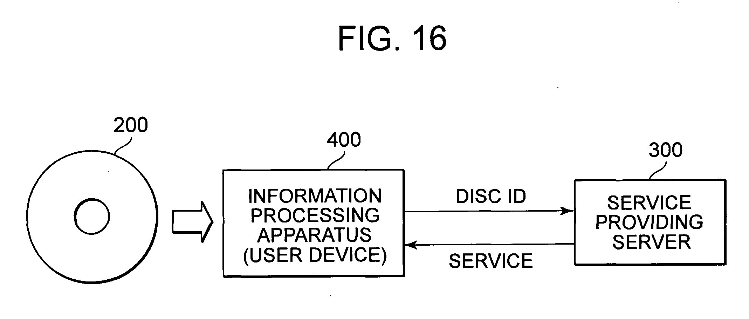

As shown in Fig. 16, the service providing server 300 receives a disc ID from the information processing apparatus (user device) 400. This disc ID is a disc ID the validity of which has been verified through the verifying processing in the information processing apparatus (user device) 400 which, after having attached thereto the information recording medium 200, has executed the processing of reading the disc ID from the information recording medium 200.

The service providing server 300, when having received the disc ID along with a service providing request from the information processing apparatus (user device) 400, verifies the validity of the disc ID, and thereafter provides a service on condition that the disc ID has been validated.

Note that the information processing apparatus (user device) 400 transmits a service ID as a service identifier, together with the disc ID, along with the service providing request.

The service providing server 300 receives the Disc ID Revocation List from the management apparatus 201, the content providing apparatus 203, or other apparatus via the input/output interface (I/F) 304 shown in Fig. 7, periodically or for each event, and performs processing of storing the latest version in the secure memory 305 constantly. Moreover, the server 300 also receives title-based title-unique values and service identification information for identifying a service which the server 300 provides, from the content providing apparatus 203 or other apparatus via the input/output interface (I/F) 304, and stores the service providing situation database described earlier with reference to Fig. 8, in which title-based service providing situation information is managed, in the secure memory 305.

The service providing server 300 stores and holds the service providing situation data shown in Fig. 8 in, e.g., the secure memory 305, and checks, in response to the service providing request accompanied by the disc ID from the information processing apparatus (user device) 400, if the service providing requesting device is making the service providing request based on a valid disc ID, and further, provides the service only in a case where an upper service providable limit is not reached on the basis of the service providing situation data shown in Fig. 8.

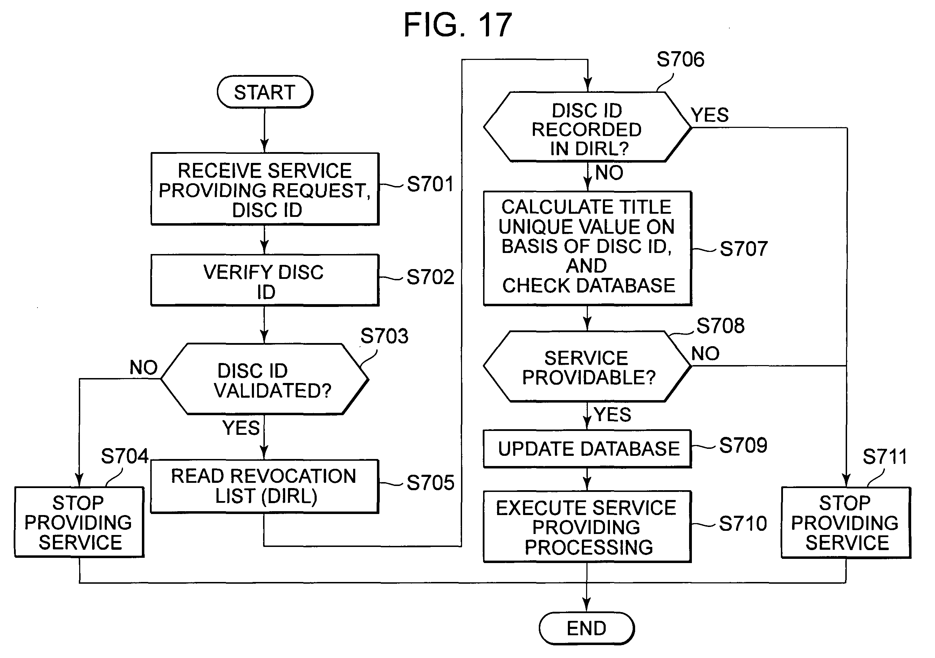

Referring to Fig. 17, a processing sequence is described, which the service providing server 300 performs when having received a service providing request from the information processing apparatus (user device) 400.

In step S701, the service providing server 300 receives a service providing request from the information processing apparatus (user device) 400 via the input/output interface (I/F) 304 shown in Fig. 7. This service providing request from the information processing apparatus (user device) 400 includes a disc ID which the information processing apparatus (user device) 400 has acquired from the information recording medium 200, and an identifier for a requested service (service identifier). The disc ID is any of the disc IDs in the Setting Examples 1-6 described earlier with reference to Fig. 11.

In step S702, the service providing server 300 executes processing of verifying the disc ID received. This verifying processing is performed according to a verification sequence similar to that for the verifying processing executed in the information processing apparatus (user device) 400, i.e., a verification sequence according to any of the Disc ID Setting Examples 1-6 described with reference to FIGS. 12-15.

When the disc ID is validated by the disc ID verifying processing in step S703, the process proceeds to step S705. When the disc ID is judged to be invalid, the process proceeds to step S704, to stop providing the service. Note that for this stopping processing, a message saying that the service providing processing is stopped may be transmitted to the information processing apparatus (user device) 400.

In a case where the disc ID is validated and the process proceeds to step S705, the server 300 reads the Disc ID Revocation List (DIRL) stored in the secure memory 305 (see Fig. 7).

In step S706, the server 300 judges whether or not the received disc ID which has been validated is recorded in the Revocation List.

In a case where the received disc ID is recorded in the Revocation List, the server 300 judges that the disc ID is invalid, and the process proceeds to step S711, to stop the service providing processing. Note that for this stopping processing, a message saying that the service providing processing is stopped may be transmitted to the information processing apparatus (user device) 400.

In a case where the disc ID received is not recorded in the Revocation List, then, in step S707, the server 300 calculates the title-unique value on the basis of the disc ID. The disc ID is configured as data containing the title-unique value M or S or data from which the title-unique value M or S is calculable, which has been described earlier with reference to Fig. 11. The service providing server 300 acquires the title-unique value M or S contained in the disc ID received, or calculates the title-unique value M or S from the disc ID received by calculating processing performed by the calculation unit 303. This processing of acquiring, calculating the title-unique value M or S is executed as processing which differs according to the Setting Examples 1-6 described earlier with reference to Fig. 11.

In step S707, the server further acquires service providing situation data corresponding to the title from the database, on the basis of the title-unique value M or S acquired from the disc ID. Namely, this is the service providing situation data described with reference to Fig. 8, and data in which various service providing situations corresponding to disc IDs are set.

In step S707, the server 300 extracts data corresponding to the disc ID and the service identifier received from the information processing apparatus (user device) 400, from the service providing situation data, and checks whether or not the service is providable.

Let a description be given therefor using the service providing situation data shown in Fig. 8 as an example. For example, in a case where the disc ID received from the information processing apparatus (user device) 400 is (Disc ID 1), and the service identifier is (Service 1), it is judged that the service is providable, since an upper limit is set to one time for the Service 1, and its service providing situation indicates "unprovided".

When having judged in step S708 that the service is providable on the basis of the service providing situation data, the process proceeds to step S709, whereas when having judged in step S708 that the service is unprovidable on the basis of the service providing situation data, the process proceeds to step S711.

In step S711, the server 300 stops its service providing processing. Note that for this stopping processing, a message saying that the service providing processing is stopped may be transmitted to the information processing apparatus (user device) 400.

If having judged that the service is providable on the basis of the service providing situation data, the server updates the database in step S709.

Let a description be given therefor again using the service providing situation data shown in Fig. 8 as an example. For example, in a case where the disc ID received from the information processing apparatus (user device) 400 is (Disc ID 1), and the service identifier is (Service 1), the service providing situation which is "unprovided" is changed to "provided one time".

In step S710, the service providing server 300 executes its service providing processing to the information processing apparatus (user device) 400 having transmitted the service providing request.

For example, when content stored in the disc is a foreign movie, various content-related services including subtitles or dubbing data for its audio, or a disc purchasing discount ticket for a sequel of the content, are provided to the information processing apparatus (user device) 400 from the service providing server 300 via a network.

Note that communication between the information processing apparatus (user device) 400 and the service providing server 300 is preferably implemented by establishing a secured communication channel where mutual authentication using cryptography is provided and a session key is shared.

Moreover, the server 300 checks the Disc ID Revocation List (DIRL) in steps S705, S706 every time a service providing request is received in the above-mentioned example. However, it may be configured such that the Disc ID Revocation List is periodically checked beforehand to keep the database updated for any disc ID listed there so as to stop providing the service involving that disc ID any more. In such a configuration, the checking of the Disc ID Revocation List (DIRL) at the time when a service providing request is received can be omitted, to reduce the time for providing a service.

Furthermore, the disc ID has been described as differing from one disc to another in the above-mentioned embodiment. However, the disc ID may be common to a unit of, e.g., 10 discs, 100 discs, or 1,000 discs, and the service providing limit set for a single disc ID may be determined in consideration of the number of discs in a group.

The present invention has been described above in great detail with reference to the specific embodiment. However, it is self-explanatory that those skilled in the art can make modifications to and substitutions for the embodiment without departing from the scope and spirit of the present invention. That is, the present invention has been disclosed by way of examples, and thus should not be construed in a restrictive sense. In order to judge the scope and spirit of the present invention, the claims set forth at the beginning should be taken into consideration.

Note that the series of processes described in the specification can be performed by hardware, software, or a configuration in which both are combined. In a case where a process based on software is executed, the processes could be executed by installing a program having recorded processing sequences therein in a memory within a computer incorporated into dedicated hardware, or by installing the program in a general-purpose computer that can execute various processing.

For example, the program can be recorded on a hard disk or a ROM (Read Only Memory) as a recording medium beforehand. Alternatively, the program can be stored (recorded) temporarily or permanently in a removable recording medium, such as a flexible disk, a CD-ROM (Compact Disc Read Only Memory), a MO (Magneto Optical) disk, a DVD (Digital Versatile Disc), a magnetic disk, a semiconductor memory. Such a removable recording medium can be provided as so-called package software.

Note that the program can be installed in a computer not only from a removable recording medium such as those mentioned above, but also through wireless transfer to the computer from a downloading site, wired transfer to the computer via a network such as a LAN, the Internet to allow the computer to receive the thus transferred program for installation in a storage medium such as a hard disk incorporated therein.

Note that the various processes described in the specification are executed not only time-sequentially according to the description, but may also be executed parallely or individually, according to the processing capability of apparatus assigned to execute the processes or as necessary. In addition, the system used in the present specification means a logical set configuration of a plurality of apparatus, and is not limited to one wherein apparatus each having its own configuration are grouped within the same enclosure.

[Industrial Applicability]

As described in the foregoing, according to the configuration of the present invention, in a configuration in which content is provided as stored in various information recording media including a DVD, a CD, a blue laser recording medium, and in which service providing processing is performed from a networked service providing server, the service providing server verifies an information recording medium ID transmitted thereto from an information processing apparatus (user device), and provides a service based on service providing situation data for each of the information recording medium IDs. Therefore, only in a case where the information processing apparatus having transmitted a service request is one having read a valid information recording medium ID from an information recording medium, and it has been validated that the service is providable on the basis of the service providing situation data, the providing of the service is executed. Thus, the configuration of the present invention allows various service information corresponding to content to be provided after strictly examining a service receiver and checking his/her having an authorized right, in, e.g., a system in which the service information corresponding to content, such as various content-associated services including subtitles or dubbing data when the content stored on a disc is a foreign movie, is provided from a server.

Furthermore, according to the configuration of the present invention, the information recording medium ID stored on the information recording medium includes data through which its validity can be checked, such as signature data of a management apparatus, and also either has a title-unique value or includes data from which the title-unique value is calculable. Therefore, the service providing server can check the validity based on the data included in the information recording medium ID, and additionally can acquire the title-unique value, whereby the server can specify service providing situation data set so as to correspond to the title-unique value. Therefore, various service information corresponding to content can be provided after strictly examining a service receiver and checking his/her having an authorized right.

**Claims**

1. A service providing server for executing service providing processing in response to a service providing request from an information processing apparatus, **characterized by** having:

   a data reception section which receives a service request accompanied by an information recording medium ID and a service ID, from the information processing apparatus;
   a storage section which stores service providing situation data for each of the information recording medium IDs as service management data for each of title-unique values corresponding to titles of content stored on information recording media; and
   a data processing section which executes processing of verifying the information recording medium ID received via the data reception section, acquires a title-unique value on the basis of the information recording medium ID on condition that the information recording medium ID is validated, acquires service providing situation data corresponding to the title-unique value from the storage section to judge whether or not a service specified by the information recording medium ID and the service ID is providable, and executes the service providing processing on condition that the service is judged to be providable.

2. The service providing server according to Claim 1, **characterized in that**:

   the data processing section is configured to execute the processing of verifying the information recording medium ID as processing of verifying signature data contained in the information recording medium ID, and execute the processing of acquiring, from the storage section, the service providing situation data corresponding to the title-unique value, according to the title-unique value contained in the information recording medium ID, or the title-unique value calculated by executing a calculation based on data contained in the information recording medium ID.

3. The service providing server according to Claim 1, **characterized in that**:

   the service providing server has the storage section which stores a revocation list being a list of unauthorized information recording medium IDs; and
   the processing of verifying the information recording medium ID in the data processing section is executed as processing of comparing the information recording medium ID received from the information processing apparatus with the IDs recorded in the revocation list.

4. The service providing server according to Claim 1, **characterized in that**:

   the information recording medium ID is configured to include a title-unique value corresponding to a title of content stored in an information recording medium, and signature data generated on the basis of a secret key of a management apparatus and differing for each of the information recording media; and
   the data processing section is configured to execute the processing of verifying the information recording medium ID as processing of generating a message to which a public key of the management apparatus is applied, for comparison with the signature data contained in the information recording medium ID, and also execute the processing of acquiring the service providing situation data corresponding to the title-unique value contained in the information recording medium ID, from the storage section.

5. The service providing server according to Claim 1, **characterized in that**:

   the information recording medium ID includes:

      a prime $p(w)$ set in response to each of a number W of information recording media manufactured; and

data IDKey(w) calculated by a calculation based on the prime p(w) and the title-unique value; and

the data processing section is configured to execute processing of judging whether or not data contained in the information recording medium ID is the prime, as the ID verifying processing, and also calculate the title-unique value from the data IDKey(w) contained in the information recording medium ID, and acquiring the service providing situation data corresponding to the title-unique value calculated, from the storage section.

6. An information processing apparatus for executing a service providing request to a service providing server, **characterized by** having:

a recording medium interface which executes processing of accessing an information recording medium; and a data processing section which executes processing of verifying an information recording medium ID read from the information recording medium via the recording medium interface, and executes processing of transmitting the information recording medium ID to the service providing server on condition that the information recording medium ID is validated.

7. The information processing apparatus according to Claim 6, **characterized in that**:

the data processing section is configured to execute the processing of verifying the information recording medium ID as processing of verifying signature data contained in the information recording medium ID.

8. The information processing apparatus according to Claim 6, **characterized in that**:

the processing of verifying the information recording medium ID in the data processing section is configured as processing of acquiring a revocation list being a list of unauthorized information recording medium IDs from a storage section or the information recording medium, and comparing the information recording medium ID received from the information processing apparatus with the IDs recorded in the revocation list acquired.

9. The information processing apparatus according to Claim 6, **characterized in that**:

the information recording medium ID includes a title-unique value corresponding to a title of content stored on the information recording medium, and signature data generated on the basis of a secret key of a management apparatus and differing for each of the information recording media; and
the data processing section is configured to execute the processing of verifying the information recording medium ID as processing of generating a message to which a public key of the management apparatus is applied, for comparison with the signature data contained in the information recording medium ID.

10. The information processing apparatus according to Claim 6, **characterized in that**:

the information recording medium ID includes:

a prime p(w) set in response to each of a number W of information recording media manufactured; and data IDKey(w) calculated by a calculation based on the prime p(w) and a title-unique value; and

the data processing section is configured to execute processing of judging whether or not data contained in the information recording medium ID is the prime, as the ID verifying processing.

11. A data processing method for executing service providing processing in response to a service providing request from an information processing apparatus, **characterized by** having:

a data reception step of receiving a service request accompanied by an information recording medium ID and a service ID, from the information processing apparatus; and
a data processing step of executing processing of verifying the information recording medium ID received, acquiring a title-unique value on the basis of the information recording medium ID on condition that the information recording medium ID is validated, acquiring service providing situation data corresponding to the title-unique value acquired, from a storage section storing service providing situation data for each of the information recording medium IDs as service management data for each of title-unique values corresponding to titles of content stored on information recording media, judging whether or not a service specified by the information recording medium ID and the service ID is providable, and executing the service providing processing on condition that the service is judged to be providable.

**12.** The data processing method according to Claim 11, **characterized in that**:

the data processing step is configured to include a step of executing the processing of verifying the information recording medium ID as processing of verifying signature data contained in the information recording medium ID, and executing processing of acquiring, from the storage section, the service providing situation data corresponding to the title-unique value, according to the title-unique value contained in the information recording medium ID, or the title-unique value calculated by executing a calculation based on data contained in the information recording medium ID.

**13.** The data processing method according to Claim 11, **characterized in that**:

the processing of verifying the information recording medium ID in the data processing step is configured to include a step of executing it as processing of comparing the information recording medium ID received from the information processing apparatus with IDs recorded in a revocation list being a list of unauthorized information recording medium IDs.

**14.** The data processing method according to Claim 11, **characterized in that**:

the information recording medium ID is configured to include a title-unique value corresponding to a title of content stored on the information recording medium, and signature data generated on the basis of a secret key of a management apparatus and differing for each of the information recording media; and
the data processing step is configured to include a step of executing the processing of verifying the information recording medium ID as processing of generating a message to which a public key of the management apparatus is applied, for comparison with the signature data contained in the information recording medium ID, and also executing the processing of acquiring the service providing situation data corresponding to the title-unique value contained in the information recording medium ID, from the storage section.

**15.** The data processing method according to Claim 11, **characterized in that**:

the information recording medium ID includes:

a prime p(w) set in response to each of a number W of information recording media manufactured; and data IDKey(w) calculated by a calculation based on the prime p(w) and the title-unique value; and

the data processing step is configured to include a step of executing processing of judging whether or not data contained in the information recording medium ID is the prime as the ID verifying processing, and also calculating the title-unique value from the data IDKey(w) contained in the information recording medium ID, and acquiring the service providing situation data corresponding to the title-unique value calculated, from the storage section.

**16.** A data processing method for executing a service providing request to a service providing server, **characterized by** having:

a recording medium accessing step of executing processing of accessing an information recording medium via a recording medium interface; and
a data processing step of executing processing of verifying an information recording medium ID read from the information recording medium via the recording medium interface, and executing processing of transmitting the information recording medium ID to the service providing server on condition that the information recording medium ID is validated.

**17.** The data processing method according to Claim 16, **characterized in that**:

the data processing step is configured to execute the processing of verifying the information recording medium ID as processing of verifying signature data contained in the information recording medium ID.

**18.** The data processing method according to Claim 16, **characterized in that**:

the processing of verifying the information recording medium ID in the data processing step is configured to include a step of acquiring a revocation list being a list of unauthorized information recording medium IDs from a storage section or the information recording medium, and comparing the information recording medium ID received from the information processing apparatus with the IDs recorded in the revocation list acquired.

**19.** The data processing method according to Claim 16, **characterized in that**:

the information recording medium ID is configured to include a title-unique value corresponding to a title of content stored on the information recording medium, and signature data generated on the basis of a secret key of a management apparatus and differing for each of the information recording media; and
the data processing step is configured to include a step of executing the processing of verifying the information recording medium ID as processing of generating a message to which a public key of the management apparatus is applied, for comparison with the signature data contained in the information recording medium ID.

**20.** The data processing method according to Claim 16, **characterized in that**:

the information recording medium ID includes:

a prime p(w) set in response to each of a number W of information recording media manufactured; and data IDKey(w) calculated by a calculation based on the prime p(w) and a title-unique value; and

the data processing step is configured to include a step of executing processing of judging whether or not data contained in the information recording medium ID is the prime, as the ID verifying processing.

**21.** A computer program for executing processing in response to a service providing request from an information processing apparatus, **characterized by** having:

a data reception step of receiving a service request accompanied by an information recording medium ID and a service ID, from the information processing apparatus; and
a data processing step of executing processing of verifying the information recording medium ID received, acquiring a title-unique value on the basis of the information recording medium ID on condition that the information recording medium ID is validated, acquiring service providing situation data corresponding to the title-unique value from a storage section storing service providing situation data for each of the information recording medium IDs as service management data for each of title-unique values corresponding to titles of content stored on information recording media, judging whether or not a service specified by the information recording medium ID and the service ID is providable, and executing the service providing processing on condition that the service is judged to be providable.

**22.** A computer program for executing a service providing request to a service providing server, **characterized by** having:

a recording medium accessing step of executing processing of accessing an information recording medium via a recording medium interface; and
a data processing step of executing processing of verifying an information recording medium ID read from the information recording medium via the recording medium interface, and executing processing of transmitting the information recording medium ID to the service providing server on condition that the information recording medium ID is validated.

# FIG. 1

101 INFORMATION RECORDING MEDIUM (DISC) ID

102 CONTENT

103 DISC ID REVOCATION LIST

104 ENCRYPTION KEY INFORMATION (EKB)

100

# FIG. 2

| | |
|---|---|
| VERSION NUMBER | 151 |
| REVOKED DISC ID LIST | 152 |
| TAMPER VERIFICATION VALUE (E.G., MAC) | 153 |

150

# FIG. 3

MESSAGE M1 (FIRST 8 BYTES)  MESSAGE M2 (NEXT 8 BYTES)  MESSAGE M3 (NEXT 8 BYTES)  -----  MESSAGE MN (LAST 8 BYTES)

INITIAL VALUE : IV

I1   I2   I3   IN

KEY (K1)

DES ENCRYPTION   DES ENCRYPTION   DES ENCRYPTION   DES ENCRYPTION

E1   E2   E3   EN

MESSAGE AUTHENTICATION CODE : MAC

$\oplus$ : XOR PROCESSING (IN 8-BYTE BLOCKS)

EP 1 713 001 A1

# FIG. 4

# FIG. 5

**EKB**

| INDEX | ENCRYPTED KEY |
|-------|---------------|
| 000 | Enc(K000,Kcon) |
| 0010 | Enc(K0010,Kcon) |

RECORDING MEDIUM

K000 → **EKB DECRYPTING PROCESSING** → Kcon

K0010 → **EKB DECRYPTING PROCESSING** → Kcon

EP 1 713 001 A1

## FIG. 6

# FIG. 7

300

302

CONTROLLER

301

303

CALCULATION
UNIT

304

INPUT/OUTPUT
INTERFACE

305

SECURE
MEMORY

306

MAIN
MEMORY

# FIG. 8

| | SERVICE 1 (UPPER LIMIT: 1 TIME) | SERVICE 2 (UPPER LIMIT: 5 TIMES) | . . . |
|---|---|---|---|
| **TITLE IDENTIFICATION INFORMATION : aaaa** **TITLE-UNIQUE VALUE : bbbb** | | | |
| DISC ID 1 | UNPROVIDED | PROVIDED 5 TIMES | . . . |
| DISC ID 2 | PROVIDED | PROVIDED 2 TIMES | . . . |
| . . . | . . . | . . . | . . . |

| TITLE IDENTIFICATION INFORMATION : aaaa TITLE-UNIQUE VALUE : bbbb | | | | | TITLE IDENTIFICATION INFORMATION : xxxx TITLE-UNIQUE VALUE : yyyy | | | |
|---|---|---|---|---|---|---|---|---|
| . . . | . . . | . . . | . . . | | . . . | . . . | . . . | . . . |
| . . . | . . . | . . . | . . . | . . . | . . . | . . . | . . . | . . . |
| . . . | . . . | . . . | . . . | | . . . | . . . | . . . | . . . |
| . . . | . . . | . . . | . . . | | . . . | . . . | . . . | . . . |

EP 1 713 001 A1

# FIG. 9

EP 1 713 001 A1

## FIG. 10

```
              START
                │
                ▼
        ┌──────────────────┐
        │   READ DISC ID   │── S101
        └──────────────────┘
                │
                ▼
        ┌──────────────────┐
        │  VERIFY DISC ID  │── S102
        └──────────────────┘
                │
                ▼              S103
      NO    ╱ DISC ID ╲
   ┌────────  VALIDATED?  ────────
   │        ╲          ╱
   │              │ YES
   │  S104        │
   ▼              │
┌─────────┐       │
│  STOP   │       │
│ PLAYBACK│       │
│ OF DISC │       │
└─────────┘       │
   │
```

READ DISC ID REVOCATION LIST (DIRL) FROM MEMORY — S105

S106 — DISC ID RECORDED IN DIRL?  YES

S107 — STOP PLAYBACK OF DISC

NO

TRANSMIT DISC ID TO SERVICE PROVIDING SERVER — S108

RECEIVE SERVICE FROM SERVICE PROVIDING SERVER — S109

END

EP 1 713 001 A1

## FIG. 11

|  | DISC ID | TITLE-UNIQUE VALUE | DISC-UNIQUE VALUE |
|---|---|---|---|
| DISC ID SETTING EXAMPLE 1 | M, Sig(w) | M | Sig(w) |
| DISC ID SETTING EXAMPLE 2 | S, Sig(w) | S | Sig(w) |
| DISC ID SETTING EXAMPLE 3 | p(w), IDKey(w) | S | p(w) OR IDKey(w) |
| DISC ID SETTING EXAMPLE 4 | e(w), I(w) | S | e(w) OR I(w) |
| DISC ID SETTING EXAMPLE 5 | $\Sigma\,w$ | S | e(w) |
| DISC ID SETTING EXAMPLE 6 | p(w), IDKey(w) | S | p(w) |

EP 1 713 001 A1

# FIG. 12

START

ACQUIRE SIGNATURE
DATA FROM DISC ID — S201

GENERATE MESSAGE
ON BASIS OF PUBLIC KEY
CORRESPONDING TO
SIGNATURE GENERATION
SECRET KEY — S202

COMPARE GENERATED
MESSAGE WITH DATA
CONTAINED IN DISC ID — S203

S204

YES / DATA COINCIDE? \ NO

S205 — DISC ID IS
VALID

DISC ID IS
INVALID — S206

END

# FIG. 13

```
            ( START )
                │
                ▼
   ┌─────────────────────────┐
   │  ACQUIRE DATA p(w)       │── S301
   │  FROM DISC ID            │
   └─────────────────────────┘
                │
                ▼         S302
         ╱─────────────────╲
  YES   ╱  ACQUIRED DATA    ╲  NO
 ◄─────┤   p(w) A PRIME?     ├─────►
         ╲                  ╱
          ╲────────────────╱
     │                           │
     ▼                           ▼
┌──────────────┐          ┌──────────────┐
│  DISC ID IS  │          │  DISC ID IS  │
S303│  VALID   │          │   INVALID    │── S304
└──────────────┘          └──────────────┘
     │                           │
     └─────────────┬─────────────┘
                   ▼
               ( END )
```

# FIG. 14

```
                START
                  │
                  ▼
         ┌──────────────────┐
         │   READ DISC ID   │──── S401
         └──────────────────┘
                  │
                  ▼
         ┌──────────────────┐
         │    CALCULATE     │──── S402
         │ S' = I(w)^e(w) mod M │
         └──────────────────┘
```

$$S' = I(w)^{e(w)} \bmod M$$

```
         ┌──────────────────┐
         │   READ DISC ID   │
         │ REVOCATION LIST  │──── S403
         │     (DIRL)       │
         │   FROM MEMORY    │
         └──────────────────┘
                  │
                  ▼
            ╱──────────╲  S404
           ╱  DISC ID   ╲   YES        ┌──────────┐
          ⟨  RECORDED    ⟩──────────→  │  STOP    │  S405
           ╲  IN DIRL?  ╱              │ PLAYBACK │
            ╲──────────╱               │ OF DISC  │
                  │ NO                 └──────────┘
                  ▼
         ┌──────────────────┐
         │  TRANSMIT DISC ID │
         │   TO SERVICE     │──── S406
         │ PROVIDING SERVER │
         └──────────────────┘
                  │
                  ▼
         ┌──────────────────┐
         │ RECEIVE SERVICE  │
         │  FROM SERVICE    │──── S407
         │ PROVIDING SERVER │
         └──────────────────┘
                  │
                  ▼
                END
```

EP 1 713 001 A1

# FIG. 15

START

READ DISC ID AND
GENERATE MESSAGE M(w)
ON BASIS OF DISC ID — S501

ACQUIRE DATA S
FROM MESSAGE M(w) — S502

END

# FIG. 16

200

400

INFORMATION
PROCESSING
APPARATUS
(USER DEVICE)

DISC ID

SERVICE

300

SERVICE
PROVIDING
SERVER

# FIG. 17

START

↓

RECEIVE SERVICE PROVIDING REQUEST, DISC ID — S701

↓

VERIFY DISC ID — S702

↓

DISC ID VALIDATED? — S703
- NO → STOP PROVIDING SERVICE — S704
- YES ↓

READ REVOCATION LIST (DIRL) — S705

↓

DISC ID RECORDED IN DIRL? — S706
- YES → STOP PROVIDING SERVICE — S711
- NO ↓

CALCULATE TITLE UNIQUE VALUE ON BASIS OF DISC ID, AND CHECK DATABASE — S707

↓

SERVICE PROVIDABLE? — S708
- NO → STOP PROVIDING SERVICE — S711
- YES ↓

UPDATE DATABASE — S709

↓

EXECUTE SERVICE PROVIDING PROCESSING — S710

↓

END

EP 1 713 001 A1

## INTERNATIONAL SEARCH REPORT

| | International application No. |
|---|---|
| | PCT/JP2005/000497 |

**A. CLASSIFICATION OF SUBJECT MATTER**
Int.Cl⁷ G06F12/14, 15/00, G11B20/10, H04L9/32

According to International Patent Classification (IPC) or to both national classification and IPC

**B. FIELDS SEARCHED**

Minimum documentation searched (classification system followed by classification symbols)
Int.Cl⁷ G06F12/14, 15/00, G11B20/10, H04L9/32

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2005 |
| Kokai Jitsuyo Shinan Koho | 1971-2005 | Toroku Jitsuyo Shinan Koho | 1994-2005 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br><br>Y | JP 2002-189801 A (Sony Corp.),<br>05 July, 2002 (05.07.02),<br>All pages; all drawings; particularly, Par. Nos.<br>[0060] to [0065]<br>& US 2002/0099661 A1 | 1,2,4-7,<br>9-12,14-17,<br>19-22<br>3,8,13,18 |
| X<br><br>Y | WO 2002/086859 A1 (Sony Corp.),<br>31 October, 2002 (31.10.02),<br>All pages; all drawings; particularly, pages<br>10 to 11; Fig. 10<br>& US 2003/0158950 A1 | 1,2,4-7,<br>9-12,14-17,<br>19-22<br>3,8,13,18 |

☒ Further documents are listed in the continuation of Box C. ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 19 April, 2005 (19.04.05) | 17 May, 2005 (17.05.05) |

| Name and mailing address of the ISA/ | Authorized officer |
|---|---|
| Japanese Patent Office | |
| Facsimile No. | Telephone No. |

Form PCT/ISA/210 (second sheet) (January 2004)

**INTERNATIONAL SEARCH REPORT**

International application No.

PCT/JP2005/000497

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2002-132587 A  (Sony Corp.), 10 May, 2002 (10.05.02), All pages; all drawings (Family: none) | 3,8,13,18 |
| Y | JP 2002-133767 A  (Sony Corp.), 10 May, 2002 (10.05.02), All pages; all drawings (Family: none) | 3,8,13,18 |

Form PCT/ISA/210 (continuation of second sheet) (January 2004)